# EUROPEAN PATENT APPLICATION

(11) **EP 1 273 371 A2**
(43) Date of publication of application: **08.01.2003**
(21) Application number: 01127068.3
(22) Date of filing: 14.11.2001
(51) Int. Cl.: B22F 1/02, B09C 1/08, C02F 1/70, B01D 53/70

(54) **Iron based powder for remediation and method for remediating soil, water, or gas**

(30) Priority: 04.07.2001 JP 2001203326; 05.10.2001 JP 2001310453
(71) Applicant: Kawasaki Steel Corporation, Kobe-shi, Hyogo 651-0075 (JP)
(72) Inventor: Nakamaru, Hiroki, c/oTechnical Research Laborator., Chiba-shi, Chiba 260-0835 (JP); Ono, Tomoshige, c/oTechnical Research Laboratories, Chiba-shi, Chiba 260-0835 (JP); Kato, Yoshiei, c/oTechnical Research Laboratories, Chiba-shi, Chiba 260-0835 (JP)
(74) Representative: Grünecker, Kinkeldey, Stockmair & Schwanhäusser Anwaltssozietät

(57) **Abstract**

A method for rendering halogenated hydrocarbons harmless, in which the halogenated hydrocarbons in at least one of polluted media, soil, water (groundwater, etc.), and gas are rapidly dehalogenated by the contact with an iron powder carrying an inorganic compound having an electric resistivity of about 1 x 10⁻⁴ Ω·m or less on the surface thereof, is provided. The iron powder for environmental remediation includes an inorganic compound having an electric resistivity of about 1 x 10⁻⁴ Ω·m or less on the surface thereof is also provided.

## Description

### BACKGROUND OF THE INVENTION

### 1. Field of the Invention

This invention relates to an iron powder for environmental remediation having superior capability to dehalogenate halogenated hydrocarbons. The invention also relates to a method for remediating at least one of soil, water and gas contaminated with halogenated hydrocarbons by using the aforementioned iron powder.

### 2. Description of the Related Art

Recently, halogenated hydrocarbons, such as trichloroethylene (TCE), have been used in quantity as degreasing solvents in semiconductor factories, metal-processing factories and the like. After use, the halogenated hydrocarbons have been conventionally discharged or dumped into water, on or into the ground, etc. Hence, contamination of soil and groundwater due to those materials has become a significant social issue.

The following conventional methods are known for treating such pollution.

Methods for treating polluted groundwater, soil gas and the like such as vapor extraction methods and pump and treat methods, in which the groundwater is drawn from the soil and treated to be rendered harmless are known. Activated carbons and destructing agents are used to eliminate and/or destruct the contaminants in those treatments.

In the methods for treating the polluted soil, thermal desorption methods and thermal destruction methods, in which the polluted soil is excavated and heat-treated and, therefore, rendered harmless, are known.

Further, bioremediation methods using microbes have been used to render the pollutants in the soil or groundwater harmless by direct destruction.

However, in the vapor extraction methods, the pump and treat methods and the like, facilities must be separately provided at the site to render the pollutants harmless after the aforementioned drawing or pumping. Therefore, the treatment cost is increased.

In the methods in which the excavated soil is thermally destructed at high temperatures and the like, a large-scale facility is required for the heat treatment of the soil. Furthermore, since soil particles themselves deteriorate due to heat, and functions of, for example, growing living organisms, which are inherent in the soil, are substantially degraded, it is difficult to reuse the soil after the treatment.

The bioremediation method cannot be applied to all soil because the soil at each site has different characteristics. Even when it is applied, reactions proceed slowly since they rely on the function of microbes and the method requires a long treatment time and, therefore, has poor usefulness in practice.

As a method which might overcome the aforementioned problems of conventional measures against the pollutions, various methods, in which halogenated hydrocarbons as pollutants are contacted with iron functioning as a reducing agent to render them harmless by dehalogenation, have been suggested and have attracted attention.

For example, Japanese Unexamined Patent Application Publication (Tokuhyo) No. 5-501520 (WO91/08176) describes a method in which a channel is dug in a flow path of groundwater and filled with iron in the form of particles, slices, fibers, or the like. Subsequently, the iron is contacted with the halogenated hydrocarbons which cause pollution of the groundwater to dehalogenate and render the halogenated hydrocarbons harmless. The iron used in that process is not necessarily specifically prepared and, therefore, generates waste during the steps of cutting metals or low purityiron powders such as iron powders are generated during the steps of casting iron and the like.

A method similar to the aforementioned method, in which halogenated hydrocarbons contained in the groundwater as pollutants are rendered harmless by using metal iron mixed with activated carbon, is described in Japanese Unexamined Patent Application Publication (Tokuhyo) No. 6-506631 (WO92/19556).

Japanese Unexamined Patent Application Publication (Tokukai) No. 11-235577 discloses a method in which chlorinated organic compounds contained in the soil above the level of groundwater or the excavated soil is contacted with an iron powder and rendered harmless by dechlorination. The iron powder used in this method must have a C content of 0.1% or more and a specific surface area of 0.05 m²/g or more. Further, this iron powder must have such a particle size that 50% by weight or more of the iron powder passes through sieve openings of 150µm. A spongy iron-ore-reduced iron powder has been recommended for such an iron powder.

International Patent Publication WO 97/04868 describes a method in which a mixed metal produced by precipitating at least one metal selected from the group consisting of Cu, Co, Ni, Mo, Bi, Sn, Pb, Ag, Cr, Pd, Pt and Au on an iron powder is contacted with an aqueous composition polluted with halogenated hydrocarbons, and the halogenated hydrocarbons are dehalogenated and, therefore, the aqueous composition is remedied.

Each of the aforementioned methods, in which halogenated hydrocarbons as pollutants are contacted with iron functioning as a reducing agent and rendered harmless by dehalogenation, has a cost advantage and, therefore, is superior to conventional measures against the polluted soil and the polluted groundwater.

However, the iron used in the aforementioned methods may not be optimized for the aforementioned purposes and uses and, therefore, there has been a problem in that halogenated hydrocarbons cannot always be destroyed at a sufficient speed.

On the other hand, the method disclosed in International Patent Publication WO 97/04868 is intended to improve the speed of dehalogenation of the halogenated hydrocarbons by increasing the reducing action of the iron powder through precipitation of metals, such as Cu, on the surface of the iron powder and, therefore, the effect due to the addition of the metal is surely exhibited.

However, a part of the metals used in the aforementioned method, for example, tin, is harmful in itself. Furthermore, since many of the used metals are expensive, especially molybdenum, platinum, gold and the like, are very expensive, another cost problem may occur.

### OBJECTS OF THE INVENTION

Accordingly, it is an object of the invention to provide an iron powder for environmental remediation, wherein the speed of dehalogenation of halogenated hydrocarbons is increased, and the problem of secondary pollution due to metals contained in the iron powder and the problem of the cost are overcome.

Furthermore, it is another object of the invention to provide a method for simply, speedily, and inexpensively remediating at least one of soil, water, such as groundwater, and gas polluted with halogenated hydrocarbons by using the aforementioned iron powder without the fear of secondary pollution.

### SUMMARY OF THE INVENTION

According to an aspect of the invention, there is provided an iron powder for remediation to dehalogenate halogenated hydrocarbons contained within contaminated media, wherein an inorganic compound having an electric resistivity of about 1 x 10⁻⁴Ω·m or less is present (exists) on the surface of the iron powder.

In the iron powder for remediation according to the invention, the aforementioned inorganic compound preferably contains at least one element selected from the group consisting of Ca, Ti, V, and Cr.

The aforementioned inorganic compound is preferably at least one selected from the group consisting of nitrides, oxides, sulfides, and carbides.

According to another aspect of the invention, there is provided a method for remediating media such as at least one of soil, water, and gas which includes a step of contacting an iron powder with halogenated hydrocarbons contained in at least one of the media, soil, water, and gas to remediate the media polluted with the halogenated hydrocarbons by dehalogenating the halogenated hydrocarbons, wherein an inorganic compound having an electric resistivity of about 1 x 10⁻⁴Ω·m or less is present on the surface of the aforementioned iron powder.

In the method for remediate at least one of the soil, water, and gas according to the invention, the inorganic compound present on the surface of the aforementioned iron powder preferably contains at least one element selected from the group consisting of Ca, Ti, V, and Cr.

The aforementioned inorganic compound is preferably at least one selected from the group consisting of nitrides, oxides, sulfides, and carbides.

According to the iron powder of the invention, the speed of dehalogenation of halogenated hydrocarbons is increased, and there is no fear of the problem of secondary pollution due to metals contained in the iron powder. The iron powder of the invention can be inexpensively produced. Furthermore, the iron powder of the invention can be applied to conventional methods, in which iron powders are used to render the polluted soil, groundwater and the like, containing halogenated hydrocarbons harmless, without any further treatment. Therefore, the iron powder for remediation and the method for remediating at least one of the soil, water, and gas according to the invention has superior usefulness in practice.

### DESCRIPTION OF THE PREFERRED EMBODIMENTS

An iron powder for remediation according to the invention will now be described below in detail.

Regarding the iron powder for remediation according to the invention, an electrically conductive inorganic compound is present on the surface of the raw iron powder. More specifically, an inorganic compound having an electric resistivity ρ of about 1 x 10⁻⁴Ω·m or less is present on the surface of the raw iron powder.

The electric resistivity ρ of the inorganic compound present on the surface of the iron powder is about 1 x 10⁻⁴Ω·m or less, preferably, about 9 x 10⁻⁵Ω·m or less, more preferably, about 1 x 10⁻⁵Ω·m or less, and further preferably, about 9 x 10⁻⁶Ω·m or less.

When such an electrically conductive inorganic compound is present on the surface of the iron powder, a local cell is formed between the base iron and the inorganic compound, and the reducing action of the iron powder is increased. Specifically, it is believed that the capability to impart an electron to the halogenated hydrocarbon is increased and, as a result, dehalogenation of the halogenated hydrocarbon is accelerated.

In the iron powder according to the invention, in order to exhibit a reducing function sufficient for accelerating the dehalogenation of the halogenated hydrocarbons due to the formation of the local cell at the surface part of the iron powder, the inorganic compound is preferably present on the surface of the iron powder in an appropriate covering rate. In the iron powder according to the invention, usually, about 1% to about 99% by area of the surface of the iron powder is covered with the inorganic compound. The inorganic compound covering rate is preferably about 5% to about 90% by area, and more preferably, is about 10% to about 50% by area. The inorganic compound can dispersively cover or exist on the surface of iron powder particles.

The inorganic compound present on the surface of the iron powder according to the invention is not specifically limited as long as it is an electrically conductive inorganic compound having the electric resistivity ρ of about 1 x 10⁻⁴ Ω·m or less. Such an electrically conductive compound can be selected from compounds containing an element, for example, Ca, Al, Ti, Mn, V, Cr, and Ni.

Among these metal elements, Ca, Ti, V, and Cr are likely to produce inorganic compounds having the electric resistivity ρ of about 1 x 10⁻⁴ Ω·m or less, and the compounds are generally harmless. Therefore, the inorganic compound present on the surface of the iron powder according to the invention preferably contains at least one element selected from the group consisting of Ca, Ti, V, and Cr. More preferably, the element contained in the aforementioned inorganic compound is substantially at least one selected from the group consisting of Ca, Ti, V, and Cr.

Examples of the atoms (or atomic groups) capable of providing the electrically conductive inorganic compounds include, for example, fluorine, nitrogen, oxygen, sulfur, and carbon. Therefore, as the electrically conductive inorganic compounds, fluorides, nitrides, oxides, sulfides, and carbides and composite compounds thereof are preferred.

The inorganic compound used in the invention preferably contains, among these, nitrides, oxides, sulfides, or carbides because these are likely to produce inorganic compounds having an electric resistivity of about 1 x 10⁻⁴ Ω·m or less. More preferably, the aforementioned inorganic compound is a nitride, oxide, sulfide, carbide, or composite compound thereof.

In the iron powder for dehalogenating the halogenated hydrocarbons according to the invention, it is preferred that the inorganic compound present on the surface of the iron powder is an inorganic compound containing at least one element selected from the group consisting of Ca, Ti, V, and Cr, and is a nitride, oxide, sulfide, carbide, or composite compound thereof.

Among the aforementioned preferable inorganic compounds, in particular, a nitride, oxide, sulfide, or carbide of Ti is preferred because it is especially likely to produce inorganic compounds having an electric resistivity of about 1 x 10⁻⁴ Ω·m or less.

Specific examples of the aforementioned inorganic compounds include, for example, CaCrO₃ (ρ= 7 x 10⁻⁶ Ω·m), TiO (ρ= 3 x 10⁻⁶ Ω·m), Ti₂O₃ (ρ= 9 x 10⁻⁵ Ω·m), Ti₃O₅ (ρ= 1 x 10⁻⁴ Ω·m), TiN (ρ= 2.17 x 10⁻⁷ Ω·m), TiS (ρ= 4 x 10⁻⁶ Ω·m), TiC (ρ= 2 x 10⁻⁶ Ω·m), VO (ρ= 2 x 10⁻⁵ Ω·m), V₂O₃ (ρ= 1 x 10⁻⁵ Ω·m), and CrO₂ (ρ= 3 x 10⁻⁶ Ω·m).

Plural kinds of inorganic compounds may be present on the surface of the iron powder. Preferable plural kinds of inorganic compounds will now be described below taking the aforementioned preferable inorganic compounds as examples.

For example, different inorganic compounds containing different elements, such as Ti and V, may be present in combination with the same atom or atomic group. Furthermore, different inorganic compounds containing different atoms or atomic groups constituting each of the inorganic compounds, such as a nitride and oxide, may be present in combination with one metal element. Different inorganic compounds containing different elements, such as Ti and V, and different atoms or atomic groups constituting each of the inorganic compounds, such as a nitride and oxide, may be present. However, the inorganic compounds effective for the invention have an electric resistivity of about 1 x 10⁻⁴ Ω·m or less.

The particle diameter and shape of the iron powder for remediation according to the invention are not specifically limited, and can be appropriately chosen with reference to the iron powders used in the conventional methods. For example, the particle diameter can be appropriately chosen depending on the state of the media such as soil, water or gas to be remedied.

For a specific example, when applied to general soil, the aforementioned iron powder preferably has a particle diameter distribution such that about 60% by mass or more of the iron powder passes through a 106 µm sieve. When applied to the groundwater and a specified permeability must be achieved, the aforementioned iron powder preferably has a particle diameter distribution such that about 80% by mass or more of the iron powder does not pass through a 250 µm sieve.

Examples of the raw iron powders used as a material for the production of the iron powder for remediation according to the invention may include, for example, those produced by the following methods.

A preferable method is one in which mill scales or iron ores are first subjected to reduction with coke, the resulting reduced iron powder is pulverized, and the particle diameter adjusted. Thereafter, finish reduction is performed in a stream of hydrogen for adjusting the purity at a predetermined value to produce the raw iron powder. A method, in which an iron powder produced by a water atomization process is subjected to the finish reduction in a stream of hydrogen, is also preferred. In addition to these, iron powders produced by an oxide reduction process, water atomization process, carbonyl process and the like can be used after the purities are adjusted as described below. Furthermore, those produced from starting materials, such as a powder of iron scrap, and the purity thereof being adjusted at a predetermined value as described below by a method, for example, pickling and reduction in a stream of hydrogen, may be used. As the raw iron powder in the invention, commercially available pure iron powders for powder metallurgy may also be used.

The contents of the primary impurities other than iron, specifically, C, Si, Mn, P, S, and O, contained in the raw iron powder are not specifically limited, although they are usually C: 0.005% to 0.2% by mass, Si: 0.005% to 0.30% by mass, Mn: 0.005% to 0.50% by mass, P: 0.005% to 0.05% by mass, S: 0.005% or more, but less than 0.03% by mass, and O: 0.005% to 0.90% by mass. Other inevitable impurities, about the amount found in commercial pure iron powder, may also be contained. However, these components are not necessarily limited within the aforementioned range.

The method for making the inorganic compound having an electric resistivity of about 1 x 10⁻⁴ Ω·m or less present on the surface of the iron powder is not specifically limited as long as the inorganic compound is present on the surface of the iron powder with the aforementioned preferable covering rate.

For example, there is a method in which a powder of an inorganic compound of a nitride, oxide, carbide, or the like of Ca, Al, Ti, Mn, V, Cr, Ni, or the like and an iron powder is mixed, and the resulting mixture is heated to provide the inorganic compound present on the surface of the iron powder. There is also a method in which an iron powder is immersed in a solution containing a soluble inorganic compound salt such as a chromate and, subsequently, the iron powder is heated and, therefore, provides the inorganic compound present on the surface of the iron powder. Furthermore, other examples include a method in which an inorganic compound is present on the surface of the iron powder by heating and melting, and a method in which an inorganic compound in a state of powder or solution is adsorbed on the surface of a porous iron powder. Another possible method is to include excess amount of elements that constitute the inorganic compound in the iron powder, and cause the precipitation of the compound in the iron powder particles by, for example, heat treatment so as to make some of the compound be precipitated or exposed on the surface of the particles.

Among these methods, regarding the methods including the step of heating, the heating is preferably performed in a vacuum, in an atmosphere of nitrogen, or in an atmosphere of argon to prevent denaturation of the inorganic compounds. In particular, heating in an atmosphere of nitrogen is especially preferred because special devices, such as a decompression device, are not required, and the gas to be used is inexpensive.

The heating temperature is preferably about 700° C to 900° C depending on the inorganic compounds to be present on the surface of the iron powder and, more preferably, the temperature is about 800° C. The heating time can be appropriately chosen in accordance with the targeted covering rate (inorganic compound covering rate on the surface of the iron powder), and is preferably about 5 minutes to about 120 minutes.

In the method in which the mixture of the inorganic compound and the iron powder is heated, the mixing ratio of the inorganic compound to the iron powder can be appropriately chosen in accordance with the targeted covering rate, although it is usually about 1 : 10,000 to about 1 : 10 and, preferably, about 1 : 1,000 to about 1 : 100.

As described above, the iron powder for remediation according to the invention is effective for dehalogenation of the halogenated hydrocarbons. In particular, it effectively dehalogenates halogenated hydrocarbons in which a halogen atom, for example, a chlorine atom, is substituted for a hydrogen atom of a hydrocarbon (especially aliphatic hydrocarbon).

Specific examples of the halogenated hydrocarbons, which can be effectively dehalogenated according to the invention, include, for example, methyl chloride, dichloromethane, chloroform, carbon tetrachloride, 1,1-dichloroethane, methyl chloroform, 1,1,1-trichloroethane, 1,1,2-trichloroethane, 1,1,1,2-tetrachloroethane, 1,1,2,2-tetrachloroethane, 1,1-dichloroethylene, cis-1,2-dichloroethylene, trans-1,2-dichloroethylene, trichloroethylene (TCE), tetrachloroethylene (PCE), 1,2-dichloropropane, 1,3-dichloropropene, methyl bromide, 2-bromopropane, 1,3-dibromopropane, 1,4-dibromobutane, and allyl bromide.

Next, a method for remediating media such as at least one of soil, water, and gas according to the invention will now be described. When referring to "media" and/or "soil", these terms are intended to apply broadly to include excavated or unexcavated soil, municipal, refinery or chemical sludges or particulates, waterway and lagoon sediments and the like.

In the invention, the aforementioned iron powder for remediation used to perform dehalogenation is contacted with halogenated hydrocarbons contained in the contaminated media, soil, water (groundwater, etc.), gas and the like. The method for the contact is not specifically limited, and may be chosen from conventionally suggested methods according to the circumstances.

For example, it is efficient to choose a location where the concentration of the halogenated hydrocarbon is high. Specific examples of the aforementioned methods include the following methods (a) to (e).
(a) a method in which the iron powder for remediation according to the invention is set in the groundwater vein polluted with halogenated hydrocarbons,
(b) a method in which the groundwater polluted with halogenated hydrocarbons is pumped up and contacted with the iron powder for remediation according to the invention,
(c) a method in which the iron powder for remediation according to the invention is added into the soil polluted with halogenated hydrocarbons,
(d) a method in which the soil polluted with halogenated hydrocarbons is excavated, and thereafter, the excavated soil and the iron powder for remediation according to the invention are mixed, and
(e) a method in which the gas produced by suction from at least one of the soil and the groundwater polluted with halogenated hydrocarbons is contacted with the iron powder for remediation according to the invention.

In the method for remediating at least one of the media, soil, water, and gas according to the invention, the environment, in which the iron powder for remediation according to the invention is applied, is not specifically limited, although when the media/soil is remediated, the water content of the media/soil is preferably about 5% by mass or more. The media/soil atmosphere may be aerobic or anaerobic. The pH of the media/soil is preferably within 1 to 10. When groundwater is remediated, the concentration of dissolved oxygen in the groundwater is not specifically limited and, therefore, the invention can be applied over a wide range.

The halogenated hydrocarbons contained in the media, soil, water, and gas undergo a dehalogenation reaction by contact with the iron powder for remediation according to the invention, and are decomposed into harmless compounds containing no halogen elements and hydrogen halides. For example, TCE receives an electron (be reduced) from the surface of the iron powder, and forms an unstable intermediate, for example, chloroacetylene, by β-elimination. Furthermore, the resulting intermediate is decomposed into compounds not containing chlorine, for example, acetylene. Sometimes, further reactions occur, although at all events, the dehalogenation reaction proceeds by the reception of the electron (be reduced) from the surface of the iron powder and, as a result, decomposition into harmless compounds proceeds.

### (Examples)

The invention will be described below using Examples, although the invention is not limited to those.

### (Examples 1 to 4)

### (i) Preparation of iron powder for dehalogenation

An as atomized powder was produced from a molten steel at 1700° C by a water atomization process. Subsequently, finish reduction was performed in a stream of hydrogen at 900° C for 1 hour, and then, pulverization and adjustment of particle diameter were performed. The components in the iron powder at this stage were examined with the result that the contents of the primary components other than iron contained in the iron powder were as described below.
- C:: 0.01% by mass
- Si:: 0.05% by mass
- Mn:: 0.15% by mass
- P :: 0.02% by mass
- O :: 0.01% by mass

A TiN powder (electric resistivity ρ: 2.17 x 10⁻⁷ Ω·m) was mixed into the resulting iron powder, and the resulting mixture was heated to 850° C in nitrogen gas and, therefore, TiN was introduced onto the surface of the iron powder. Subsequently, the TiN iron powder was pulverized again, and the distribution of the particle diameter was adjusted by sieve classification such that 60% by mass of the iron powder passed through sieve openings of 75 µm. The mixing ratio of TiN relative to the iron powder and the heating time after mixing were variously changed to set the TiN covering rate of the iron powder for remediation at 5%, 10%, 30%, and 60% by area. The TiN covering rate of the surface of the iron powder was determined by SEM observation.

### (ii) Destruction test of halogenated hydrocarbon in the soil

Sandy soil having an average particle diameter of 176 µm, which had been dried beforehand for 2 days in an oven at 40° C, was mixed with the iron powder for dehalogenation, which had been prepared as described above, to prepare a sample having the total mass of 40 g and an iron powder mixing rate of 1% by mass. At this time, a sample containing no iron powder was prepared simultaneously as a reference sample.

Each of these samples was put in a glass vial having a volume of 100 mL (milliliter), and the vial was sealed by putting a butyl rubber stopper with a liner made of fluororesin on the vial, and further by fastening with an aluminum cap.

Trichloroethylene (TCE) (manufactured by KANTO CHEMICAL CO., LTD.; reagent grade) was dissolved in distilled water, and an aqueous solution having a concentration of 973 mg/L was prepared. 4.5 mL of the resulting aqueous solution was added into the vial, in which the aforementioned sample had been encapsulated, using a micro-syringe, and the water content of the sample was adjusted to 10% by mass. The resulting sample was stored in a thermostatic chamber at 23° C, and after the test for 3 days, 50 µL of gas was taken from the headspace portion with a gas tight syringe, and the concentration of trichloroethylene was analyzed with a GC/FID.

The destruction speed was evaluated based on the ratio of the trichloroethylene concentration of the sample containing the iron powder after the test for 3 days to the trichloroethylene concentration of the reference sample after the test for 3 days. The evaluation results are shown in Table 1.

### (iii) Destruction test of halogenated hydrocarbon in the groundwater

CaCO₃ (manufactured by KANTO CHEMICAL CO., LTD.; reagent grade) was dissolved in deionized water, and an aqueous solution having a concentration of 0.4 mM was prepared as simulated groundwater. A glass vial having a volume of 50 mL was filed to the point of overflowing with the simulated groundwater, and thereafter, in a globe box, nitrogen was blown into the vial to completely degass it. Subsequently, 5 g of the iron powder for remediation prepared as described above was added thereto, and the vial was sealed with no headspace by putting a butyl rubber stopper with a liner made of fluororesin on the vial, and further by fastening with an aluminum cap. At this time, a sample containing no iron powders was prepared simultaneously as a reference sample in a manner similar to that in (ii). The total amount of the liquid in each of the vial had been measured beforehand.

Trichloroethylene standard stock solution for analyzing water quality (1 mg/mL-methanol; manufactured by KANTO CHEMICAL CO., LTD.) was added into the aforementioned vial with a micro-syringe in a proper amount and, therefore, the trichloroethylene concentration was adjusted at 5 mg/L. The resulting sample was shaken with a rotary shaker at 60 rpm for 3 days in a thermostatic chamber at 23° C.

Separately, 9.8 mL of 300 g/L sodium chloride aqueous solution produced using deionized water was prepared in a vial for GC/MS analysis having a volume of 25 mL.

By using a micro-syringe, 200 µL of the aforementioned sample shaken for 3 days was taken and added to the aforementioned sodium chloride aqueous solution (in the vial having a volume of 25 mL) and, therefore, the total amount of the liquid was adjusted at 10 mL. Then, the vial was sealed immediately by septam with a liner made of fluororesin. The trichloroethylene concentration of the resulting sample was analyzed by a Headspace GC/MS in conformity with JIS K 0125 Testing methods for volatile organic compounds in industrial water and waste water. The destruction speed of trichloroethylene was evaluated based on the ratio of the trichloroethylene concentration of the sample containing the iron powder to the trichloroethylene concentration of the reference sample in a manner similar to that in (ii).
The results of the destruction tests and measurements are shown in Table 1.

### (Examples 5 to 8)

An iron powder for remediation was prepared in a manner similar to those in Examples 1 to 4 using a TiO powder (electric resistivity ρ: 3 x 10⁻⁶ Ω·m) instead of the TiN powder, and the destruction test of the halogenated hydrocarbons in the soil and thedestruction test of trichloroethylene in the groundwater were carried out. The results are shown in Table 1.

**[Table 1]**

| Sample | Iron powder for dehalogenation | | Halogenated hydrocarbon destruction test¹⁾ | |
|---|---|---|---|---|
| | Particle diameter (amount of powder passed through 75 µm sieve) (%by mass) | Metal compound covering rate²⁾ (% by area) | Soil | Ground-water |
| Example 1 | 60% by mass or more | TiN 5 | 0.05 | 0.06 |
| 2 | 60% by mass or more | TiN 10 | 0.01 | 0.02 |
| 3 | 60% by mass or more | TiN 30 | 0.02 | 0.01 |
| 4 | 60% by mass or more | TiN 60 | 0.10 | 0.20 |
| Comparative | 60% by mass or more | 0 | 0.99 | 0.98 |
| example 1 | | | | |
| Example 5 | 60% by mass or more | TiO 5 | 0.20 | 0.30 |
| 6 | 60% by mass or more | TiO 10 | 0.03 | 0.05 |
| 7 | 60% by mass or more | TiO 30 | 0.02 | 0.03 |
| 8 | 60% by mass or more | TiO 60 | 0.70 | 0.80 |
| Comparative example 2 | 60% by mass or more | TiO₂ 10 | 0.97 | 0.98 |

| | | | | |
|---|---|---|---|---|
| 1) Ratio of TCE concentration of sample to TCE concentration of reference sample after test for 3 days | | | | |
| 2) Electric resistivity TiN 2.17 x 10⁻⁷ Ω·m TiO 3 x 10⁻⁶ Ω·m TiO₂ 1.2 x 10² Ω·m | | | | |

### (Examples 9 to 12)

An iron powder for remediation was prepared in a manner similar to those in Examples 1 to 4 by using a V₂O₃ powder (electric resistivity ρ: 1 x 10⁻⁵ Ω·m) instead of the TiN powder, and the destruction test of the halogenated hydrocarbons in the soil and the destruction test of trichloroethylene in the groundwater were carried out. The results are shown in Table 2.

**[Table 2]**

| Sample | Iron powder for dehalogenation | | Halogenated hydrocarbon destruction test¹⁾ | |
|---|---|---|---|---|
| | Particle diameter (amount of powder passed through 75 µm sieve) (% by mass) | Inorganic compound covering rate²⁾ (% by area) | Soil | Ground-water |
| Example 9 | 60% by mass or more | V₂O₃ 5 | 0.60 | 0.70 |
| 10 | 60% by mass or more | V₂O₃ 10 | 0.10 | 0.15 |
| 11 | 60% by mass or more | V₂O₃ 30 | 0.12 | 0.13 |
| 12 | 60% by mass or more | V₂O₃ 60 | 0.80 | 0.85 |

| | | | | |
|---|---|---|---|---|
| 1) Ratio of TCE concentration of sample to TCE concentration of reference sample after test for 3 days | | | | |
| 2) Electric resistivity V₂O₃ 1 x 10⁻⁵ Ω·m | | | | |

### (Comparative example 1)

An as atomized powder was produced from a molten steel at 1700° C by a water atomization process. Subsequently, finish reduction was performed in a stream of hydrogen at 900° C for 1 hour, and then, pulverization and adjustment of particle diameter were performed. The components in the iron powder at this stage were examined with the result that the contents of the primary components other than iron contained in the iron powder were as described below.
- C :: 0.01% by mass
- Si:: 0.05% by mass
- Mn:: 0.15% by mass
- P :: 0.02% by mass
- O :: 0.01% by mass

The inorganic compound was not sintered on the resulting iron powder. Subsequently, the destruction test of the halogenated hydrocarbons in the soil and the destruction test of the halogenated hydrocarbons in the groundwater were carried out in a manner similar to that in Example 1. The results of the destruction tests and measurements are shown in Table 1.

### (Comparative example 2)

An iron powder having a TiO₂ powder covering rate of 10% by area was prepared using a TiO₂ powder (electric resistivity ρ: 1.2 x 10² Ω·m) having an electric resistivity greater than 1 x 10⁻⁴ Ω·m instead of the TiN powder. Thereafter, the destruction test of the halogenated hydrocarbons in the soil and the destruction test of the halogenated hydrocarbons in the groundwater were carried out in a manner similar to that in Example 1. The results of the destruction tests and measurements are shown in Table 1.

When the inorganic compound is not present on the iron powder (Comparative example 1), or the inorganic compound (TiO₂) having an electric resistivity greater than about 1 x 10⁻⁴ Ω·m is present on the iron powder (Comparative example 2), the speed of destruction is low and, therefore, the trichloroethylene concentrations are hardly decreased after testing for 3 days. On the other hand, decreases in the concentration are clearly observed when an inorganic compound having an electric resistivity of about 1 x 10⁻⁴ Ω·m or less (TiN: electric resistivity ρ = 2.17 x 10⁻⁷ Ω·m, TiO: electric resistivity ρ = 3 x 10⁻⁶ Ω·m, or V₂O_{3:} electric resistivity ρ = 1 x 10⁻⁵ Ω·m) is present on the iron powder for remediation according to the invention (Examples 1 to 12).

The iron powder for remediation according to the invention has an unexpectedly and remarkably increased dehalogenation speed of halogenated hydrocarbons. There is no fear of the problem of secondary pollution due to metals contained in the iron powder, and the iron powder of the invention can be inexpensively produced. Furthermore, the iron powder of the invention can be applied to conventional methods, in which iron powders are used to render the polluted soil, groundwater and the like, containing halogenated hydrocarbons harmless, without any further treatment and, therefore, has superior usefulness in practice.

## Claims

1. Iron powder adapted to remediate selected media by dehalogenating halogenated hydrocarbons in the media comprising:
iron powder particles; and
an inorganic compound having an electric resistivity of about 1 x 10⁻⁴ Ω·m or less on at least a portion of the surfaces of the iron powder particles.

2. The iron powder according to Claim 1, wherein the inorganic compound comprises at least one metal element selected from the group consisting of Ca, Ti, V, and Cr.

3. The iron powder according to Claim 1, wherein the inorganic compound comprises at least one compound selected from the group consisting of nitrides, oxides, sulfides, and carbides.

4. The iron powder according to Claim 1, wherein the organic compound is selected from the group consisting of CaCrO₃, TiO, Ti₂O₃, Ti₃O₅, TiN, TiS, TiC, VO, V₂O₃ and CrO₂.

5. A method for remediating selected media contaminated with halogenated hydrocarbons comprising:
contacting iron powder particles and an inorganic compound having an electric resistivity of about 1 x 10⁻⁴ Ω·m or less on at least a portion of the surfaces of the iron powder particles with the halogenated hydrocarbons; and
causing dehalogenation of the halogenated hydrocarbons to thereby remediate the media.

6. The method according to Claim 5, wherein the inorganic compound comprises at least one metal element selected from the group consisting of Ca, Ti, V, and Cr.

7. The method according to Claim 5, wherein the inorganic compound comprises at least one selected from the group consisting of nitrides, oxides, sulfides, and carbides.

8. The method according to Claim 5, wherein the media is selected from the group consisting of soil, water and gas.

9. The method according to Claim 5, wherein the halogenated hydrocarbons are selected from the group consisting of methyl chloride, dichloromethane, chloroform, carbon tetrachloride, 1,1-dichloroethane, methyl chloroform, 1,1,1-trichloroethane, 1,1,2-trichloroethane, 1,1,1,2-tetrachloroethane, 1,1,2,2-tetrachloroethane, 1,1-dichloroethylene, cis-1,2-dichloroethylene, trans-1,2-dichloroethylene, trichloroethylene (TCE), tetrachloroethylene (PCE), 1,2-dichloropropane, 1,3-dichloropropene, methyl bromide, 2-bromopropane, 1,3-dibromopropane, 1,4-dibromobutane, and allyl bromide.

10. The method according to Claim 5, wherein the iron powder is added into media contaminated with the halogenated hydrocarbons.
